## Europäisches Patentamt

## European Patent Office

## Office européen des brevets

(19)

(11) Veröffentlichungsnummer: **0 031 469**
**B1**

(12)

# EUROPÄISCHE PATENTSCHRIFT

(45) Veröffentlichungstag der Patentschrift:
**08.01.86**

(51) Int. Cl.⁴: **C 08 G 63/26**

(21) Anmeldenummer: **80107410.5**

(22) Anmeldetag: **27.11.80**

(54) **Verfahren zum Kondensieren von linearem Poly(alkylenterephthalat).**

(30) Priorität: **05.09.80 DE 3033468**
**21.12.79 DE 2951609**

(73) Patentinhaber: **HÜLS AKTIENGESELLSCHAFT,**
**Patentabteilung / PB 15 - Postfach 13 20,**
**D-4370 Marl 1 (DE)**

(43) Veröffentlichungstag der Anmeldung:
**08.07.81 Patentblatt 81/27**

(45) Bekanntmachung des Hinweises auf die Patenterteilung:
**08.01.86 Patentblatt 86/2**

(72) Erfinder: **Horlbeck, Gernot, Dr., In der Thiebrei 80,**
**D-4358 Haltern (DE)**
Erfinder: **Heuer, Horst, An der Landwehr 76,**
**D-4358 Haltern (DE)**
Erfinder: **Bax, Hanns-Jörg, Dr., Lipper Weg 193,**
**D-4370 Marl (DE)**
Erfinder: **Jadamus, Hans, Dr., Hervester Strasse 8,**
**D-4370 Marl (DE)**

(84) Benannte Vertragsstaaten:
**AT BE CH FR GB IT LI LU NL SE**

(56) Entgegenhaltungen:
**EP - A - 0 003 961**
**DE - A - 1 570 689**
**DE - A - 2 503 000**
**DE - A - 2 918 675**

ACTORUM AG

## Beschreibung

Gegenstand der Erfindung ist ein Verfahren zum Kondensieren von linearem Poly(alkylenterephthalat) mit einer Viskositätszahl von mindestens 60 cm³/g in 2 Stufen und bei erhöhter Temperatur in fester Phase in Gegenwart von Alkandiolen, wobei in dem Poly(alkylenterephthalat) bis zu 30 Mol-% der Terephthalsäure durch andere an sich bekannte Dicarbonsäuren und bis zu 30 Mol-% des jeweiligen Diols durch andere an sich bekannte Diole ersetzt sein können oder bis zu 4 bis 40 Mol-% (bezogen auf das Poly(alkylenterephthalat) eines Poly(oxyalkylen)diols enthalten sein können.

Poly(alkylenterephthalate), besonders Poly(ethylenterephthalat) (PETP) und Poly(butylenterephthalat) (PBTP), sind ausgezeichnete Werkstoffe zur Herstellung von Filmen, Folien, Formteilen etc.; insbesondere bei der Herstellung von Formteilen nach dem Spritzguss- und Extrusionsverfahren soll das Poly(alkylenterephthalat) eine Viskositätszahl >100 cm³/g besitzen.

Die Poly(alkylenterephthalate) werden üblicherweise durch Um- oder Veresterung und anschliessende Polykondensation von Terephthalsäure oder deren polyesterbildenden Derivaten und einem Alkandiol in Gegenwart von Katalysatoren hergestellt (Sorensen und Campbell, Preparative Methods of Polymer Chemistry, Interscience Publishers Inc., N.Y. 1961, Seiten 111 bis 127; Kunststoff-Handbuch, Band VIII, C. Hanser Verlag München 1973).

Nach diesen in der Schmelze durchgeführten Verfahren können so hohe Viskositäten, wie sie z.B. für Spritzguss- und Extrusionszwecke benötigt werden, nicht erreicht werden, da aufgrund der Temperaturbelastung in der Polykondensationsstufe bereits Abbaureaktionen einsetzen, so dass die gewünschte hohe Viskosität nicht erreicht werden kann.

Eine weitere Begrenzung der Viskosität der Polyester beim Schmelzkondensationsverfahren ergibt sich durch die mit fortschreitender Polykondensation zunehmende Viskosität der Schmelze, die das Entweichen der flüchtigen, niedermolekularen Reaktionsprodukte erschwert bzw. unmöglich macht und dadurch den Polykondensationsfortschritt hemmt. Zudem bereitet es technische Schwierigkeiten, die hochviskose Schmelze aus dem Reaktionsgefäss auszutragen (DE-OS 2 117 748).

Sofern erforderlich wird eine Festphasennachkondensation durchgeführt (GB-PS 1 066 162, US-PS 3 405 098). Dies geschieht in der Weise, dass der Polyester in Granulat- oder Pulverform auf Temperaturen gebracht wird, die etwa 10 bis 60°C unterhalb des Schmelzpunktes liegen. In diesem Temperaturbereich wird das Poly(alkylenterephthalat) so lange im Inertgasstrom oder unter Vakuum behandelt, bis die gewünschte hohe Viskosität erreicht ist.

Die Nachkondensation kann entweder diskontinuierlich, z.B. in einem Taumeltrockner (DE-OS 2 117 748), oder kontinuierlich, z.B. im Wirbelschichtverfahren (DE-OS 1 804 551) oder in einem Schneckenreaktor (DE-OS 2 162 618), durchgeführt werden.

Ein grundsätzlicher Nachteil der Festphasennachkondensation besteht in der langen Reaktionszeit bei erhöhter Temperatur; dies kann dazu führen, dass zwar ein Poly(alkylenterephthalat) mit der gewünschten Viskosität erhalten wird, dieses aber bereits so geschädigt ist, dass es bei der Verarbeitung aus der Schmelze stark abbaut. Aus solchem Material hergestellte Formteile sind spröde und brüchig.

Es wurde deshalb vorgeschlagen, zur Verkürzung der Nachkondensationszeit Poly(alkylenterephthalate) in gemahlener Form einzusetzen, jedoch ist dieses Verfahren nicht wirtschaftlich. Ausserdem besteht die Gefahr des Zusammenbackens des Pulvers (DE-OSS 2 152 245 und 2 117 748).

Ein anderes Verfahren sieht vor, nach der Nachkondensation eine Umsetzung des Polyesters mit monofunktionellen Glycidylethern oder Carbonaten durchzuführen und somit die Stabilität des Polyesters zu verbessern (DE-OS 1 929 149). Dieses Verfahren ist zeitaufwendig und erfordert den Einsatz von polyesterfremden Substanzen.

In DE-OS 2 503 000 wird ein Verfahren zur Festphasennachkondensation von PBTP vorgeschlagen, bei dem die Nachkondensation in einem dauernd mit 1,4-Butandiol beladenen Inertgasstrom durchgeführt wird. Nach diesem Verfahren ist es jedoch nicht möglich, ohne Mitverwendung von Verzweigungskomponenten die gewünschte hohe Viskosität zu erreichen.

Mit Verzweigungskomponenten modifizierte Poly(alkylenterephthalate), wie sie in der DE-OS 250 300 angegeben sind, neigen zum Vergelen und ergeben spröde und brüchige Formteile.

Aufgabe der vorliegenden Erfindung war es, ein Verfahren zur Herstellung von in der Schmelze stabilem, hochviskosem Poly(alkylenterephthalat) zu entwickeln, wobei das Verfahren nicht die zum Stand der Technik aufgezählten Nachteile aufweist.

Die Aufgabe wurde dadurch gelöst, dass in einer ersten Stufe das Poly(alkylenterephthalat) bei Temperaturen, die 30 bis 80°C unterhalb des Schmelzpunktes des Poly(alkylenterephthalats) liegen, mit 0,2 bis 3,5 Gew.-% – bezogen auf das Poly(alkylenterephthalat) – eines Alkandiols, dessen Siedepunkt bei Normaldruck 20 bis 70°C oberhalb der Reaktionstemperatur liegt, in einem Inertgasstrom behandelt wird, wobei die pro Stunde durchgeleitete Inertgasmenge – gemessen unter Normbedingungen (0°C und 1013 mbar) dem 0,3 bis 2fachen des Reaktorbruttovolumens entspricht und in einer zweiten Stufe das Poly(alkylenterephthalat) bei Temperaturen, die 5 bis 25°C unterhalb des Schmelzpunktes des Poly(alkylenterephthalats) liegen, in einem Inertgasstrom kondensiert wird, wobei die pro Stunde durchgeleitete Inertgasmenge – gemessen unter Normbedingungen – dem 2,5- bis 10fachen des Reaktorbruttovolumens entspricht.

Als in der ersten Stufe erfindungsgemäss einzusetzende Alkandiole kommen solche mit 2 bis 6 C-Atomen in der Kohlenstoffkette wie z.B. Ethylenglykol, 1,4-Butandiol, 1,6-Hexandiol, Neopentylglykol, 1,3-Butandiol o.ä. infrage. Bevorzugt werden solche Diole verwendet, die auch in der Diolkomponente des Poly(alkylenterephthalats) verwendet worden sind. In jedem Fall muss beachtet werden, dass die erfindungsgemässe Temperaturdifferenz zwischen dem Siedepunkt des Diols und der Reaktionstemperatur eingehalten wird. Bevorzugt sind Diole, deren Siedepunkte 30 bis 60°C oberhalb der Reaktionstemperatur liegen. Die Diole werden bevorzugt in einer Menge von 0,3 bis 1 Gew.-% – bezogen auf das Poly(alkylenterephthalat) – eingesetzt.

Die Reaktionstemperatur der ersten Stufe liegt vorzugsweise 35 bis 60°C unterhalb des Schmelzpunktes des Poly(alkylenterephthalats).

In der zweiten Stufe wird eine Reaktionstemperatur bevorzugt, die 10 bis 20°C unterhalb des Schmelzpunktes des Poly(alkylenterephthalats) liegt.

Die Reaktion wird in beiden Stufen üblicherweise unter Normaldruck ausgeführt; sofern erforderlich kann – insbesondere in der zweiten Stufe – auch mit Unterdruck gearbeitet werden.

Als Inertgas für die erste und zweite Stufe kommt insbesondere der üblicherweise für Polykondensationsreaktionen verwendete Stickstoff infrage. Andere Inertgase können jedoch gleichfalls eingesetzt werden. In der ersten Stufe wird vorzugsweise pro Stunde eine Inertgasmenge durchgeleitet, die – gemessen unter Normbedingungen – dem 0,5- bis 1,5fachen des Reaktorbruttovolumens entspricht. In der zweiten Stufe wird eine derartige Inertgasmenge bevorzugt, die pro Stunde dem 3- bis 7fachen des Reaktorbruttovolumens entspricht.

Die Volumenangaben für die durchgeleiteten Inertgasmengen beziehen sich nicht auf die jeweiligen Reaktionsbedingungen, sondern auf Normbedingungen, d.h. auf 0°C und 1013 mbar.

Das erfindungsgemässe Verfahren wird in der ersten Stufe so geführt, dass die Carboxylendgruppenkonzentration abnimmt. Erreicht die Konzentration ein Minimum bzw. annähernd ein Minimum, wird die Reaktion der ersten Stufe abgebrochen und das Poly(alkylenterephthalat) wird gemäss der zweiten Stufe weiterbehandelt. Für die Beendigung der ersten Stufe ist zu berücksichtigen, dass die Viskositätszahl des Polyesters 45 bis 50 cm³/g nicht unterschreitet.

Die Verweilzeit des Poly(alkylenterephthalats) in der ersten Reaktionsstufe beträgt in Abhängigkeit von den genannten Parametern etwa 2 bis 16, vorzugsweise 3 bis 10 Stunden, in der zweiten Reaktionsstufe liegt die Verweildauer etwa bei 4 bis 30, vorzugsweise 8 bis 25 Stunden.

Die für die erfindungsgemässe Nachkondensation geeigneten Poly(alkylenterephthalate), vorzugsweise Poly(ethylenterephthalat) und Poly(butylenterephthalat), werden nach den üblichen Schmelzpolykondensationsverfahren hergestellt.

Sie sollen eine Viskositätszahl von mindestens 60 cm³/g, vorzugsweise mindestens 70 cm³/g, besitzen.

Bis zu 30 Mol-% der Terephthalsäure in den Poly(alkylenterephthalaten) können durch an sich bekannte andere Dicarbonsäuren ersetzt werden. Beispiele geeigneter Dicarbonsäuren sind Isophthalsäure, Phthalsäure, 1.4-Cyclohexandicarbonsäure, Adipinsäure, Sebazinsäure oder Decandicarbonsäure.

Die Diolkomponente wird durch Alkandiole mit 2 bis 12 C-Atomen in der Kohlenstoffkette gebildet; bevorzugt sind hierbei Ethylenglykol bzw. 1,4-Butandiol. Bis zu 30 Mol-% der Diolkomponente des jeweiligen Poly(alkylenterephthalats) können durch andere Diole, wie beispielsweise Neopentylglykol, 1,5-Pentandiol, 1,6-Hexandiol, 1,4- bzw. 1,3-Dimethylolcyclohexan oder 1,12-Dodecandiol ersetzt sein.

Unter den Begriff Poly(alkylenterephthalat) werden auch Blockcopolyester gerechnet. Derartige Produkte werden z.B. in Chimia 28 (9), Seiten 544 bis 552 (1974) und in Rubber Chemistry and Technology 50, Seiten 688 bis 703 (1977) beschrieben. Diese Blockcopolyester enthalten neben den obengenannten aromatischen Dicarbonsäuren und Diolen ein Poly(oxyalkylen)diol mit einem Molgewicht im Bereich von etwa 600 bis 2500. Bevorzugte Poly(oxyalkylen)diole sind Poly(oxyethylen)diol, Poly(oxypropylen)diol und Poly(oxytetramethylen)diol. Der Anteil der Poly(oxyalkylen)diole liegt im Bereich von 4 bis 40 Gew.-%, vorzugsweise von 10 bis 35 Gew.-% (bezogen auf den genannten Blockcopolyester).

Die in dem erfindungsgemässen Verfahren eingesetzten linearen Poly(alkylenterephthalate) können Hilfs- und Zusatzstoffe enthalten. Hierfür kommen z.B. Nucleierungs-, Mattierungs-, Fliessmittel oder andere Verarbeitungsmittel sowie Pigmente, Füll- und Verstärkungsstoffe o.ä. infrage.

Nucleierungs-, Mattierungs-, Fliessmittel oder andere Verarbeitungsmittel sind in Mengen bis 6 Gew.-%, bevorzugt von 0,2 bis 3,5 Gew.-%, bezogen auf die Gesamtmischung, im Poly(alkylenterephthalat) enthalten.

Pigmente, Füll- und Verstärkungsstoffe o.ä. sind in Mengen bis 60 Gew.-%, bevorzugt von 1 bis 50 Gew.-%, bezogen auf die Gesamtmischung, im Poly(alkylenterephthalat) enthalten.

Die Hilfs- und Zusatzstoffe können bereits zu Beginn der 1. Stufe der Kondensationsreaktion im Poly(alkylenterephthalat) vorliegen, sie können jedoch auch zu jedem späteren Zeitpunkt eingearbeitet werden.

Die erfindungsgemäss hergestellten Poly(alkylenterephthalate) zeigen verbesserte Hydrolyse- und Schmelzstabilität. So eignen sie sich beispielsweise zur Herstellung von Monofilamenten für Filtergewebe, an die hohe Anforderungen bezüglich der genannten Eigenschaften gestellt werden.

Die in der Beschreibung und in den Beispielen angeführten Parameter wurden mit Hilfe der nachstehend genannten Messmethoden bestimmt:

Als Schmelzpunkt $[T_m]$ wird das durch Differential-Thermocalorimetrie (DSC) ermittelte Schmelzmaximum des Polyesters bezeichnet (Aufheizgeschwindigkeit 16 °C/min).

Die Viskositätszahlen [J] wurden an Lösungen von 0,23 g Poly(alkylenterephthalat) in 100 ml Phenol/1.1.2.2-Tetrachlorethan (Gewichtsverhältnis 60 : 40) bei 25 °C gemessen.

Die Carboxylendgruppenkonzentrationen [COOH] wurden nach der Methode von H. A. Pohl (Analyt. Chem. 26, 1614–1954) bestimmt.

Die Hydrolysestabilität der Polyester wurde durch die Abnahme der Viskositätszahl nach einer 24stündigen Behandlung des feingemahlenen Materials mit 130 °C heissem Wasser in einem Drucktopf charakterisiert.

Der Abbau betrifft die Hydrolysestabilität der Polyester; er wird als prozentuale Abnahme der Viskositätszahl durch die Hydrolyse angegeben.

$$\frac{J_o - J_{Hydr.}}{J_o} \cdot 100$$

($J_o$ = Ausgangsviskositätszahl, $J_{Hydr.}$ = Viskositätszahl nach dem Hydrolysetest).

Zur Bestimmung der Schmelzstabilität wurden im Mechanischen Spektrometer der Fa. Rheometrics (Kegel-Platte-System, Durchmesser = 25 mm, Kegelwinkel $\beta$ = 0,1 rad., Frequenz = 1 rad./s) für einen Zeitraum von einer Stunde und im Abstand von 5 Min. die Schmelzviskositäten der jeweiligen Probe bei 240 °C gemessen.

Mit Buchstaben gekennzeichnete Versuche sind nicht erfindungsgemäss.

Beispiele

Die angegebenen Stickstoffmengen sind unter Normbedingungen gemessen.

Versuche 1 bis 3

120 kg Poly(butylenterephthalat) ([J]: 77 cm³/g; [COOH]: 17 Äqu./10⁶ g; $[T_m]$: 225 °C) werden in einem 0,5 m³-Taumeltrockner mit der in Tabelle 1 angegebenen Menge 1,4-Butandiol versetzt, im Stickstoffstrom (Durchsatz siehe Tabelle 1) auf 180 °C erhitzt und 3 bis 5 Stunden bei dieser Temperatur behandelt; dann werden der Stickstoffdurchsatz auf 2 m³/h und die Innentemperatur des Taumeltrockners auf 210 °C erhöht. Unter diesen Bedingungen wird 24 Stunden kondensiert.

Tabelle 1
Verfahrensmassnahmen in der 1. Stufe

| Versuch | 1,4-Butandiol Zusatz [Gew.-%] | N₂-Durchsatz [m³/h] | Behandlungszeit [h] |
|---|---|---|---|
| 1 | 0,5 | 0,5 | 5 |
| 2 | 0,5 | 0,5 | 3 |
| 3 | 0,35 | 0,5 | 3 |

Versuch A

120 kg des in den Versuchen 1 bis 3 verwendeten Poly(butylenterephthalats) werden ohne Zusatz von 1,4-Butandiol im 0,5 m³-Taumeltrockner bei 210 °C und 2 m³/h N₂ 24 Stunden kondensiert.

Die Hydrolyse- und Schmelzstabilitäten der Produkte der Versuche 1 bis 3 und A sind in Tabelle 2 zusammengestellt.

Tabelle 2
Eigenschaften der erfindungsgemäss behandelten Proben

| Versuch | J[cm³/g] | Hydrolysestabilität* J[cm³/g] | Abbau [%] | Schmelzviskosität [Pa · s] nach 10 min/ 240 °C | nach 60 min/ 240 °C |
|---|---|---|---|---|---|
| 1 | 123 | 90 | 27 | 1950 | 1600 |
| 2 | 140 | 107 | 24 | 2250 | 1900 |
| 3 | 147 | 109 | 26 | 2400 | 2050 |
| A | 135 | 65 | 52 | 1700 | 1150 |

* bestimmt als Viskositätszahl

Versuch 4

In einem 0,5 m³-Taumeltrockner werden 58 kg Blockcopolyester ([J]: 83 cm³/g; [COOH]: 39 Äqu./10⁶ g; $[T_m]$: 220 °C) aus 61 Gew.-% Terephthalsäure, 29 Gew.-% 1.4-Butandiol und 10 Gew.-% Poly(oxyethylen)diol mit $\bar{M}_n$ = 1000 mit 0,58 kg 1.4-Butandiol versetzt, im Stickstoffstrom (0,5 m³/h) auf 180 °C erhitzt und 10 Stunden bei dieser Temperatur belassen. Dann werden die Innentemperatur auf 200 °C und der Stickstoffdurchsatz auf 2 m³/h erhöht und ein Druck von 40 h Pa eingestellt. Nach 24 Stunden beträgt die Viskositätszahl [J] 168 cm³/g. Die Carboxylendgruppenkonzentration [COOH] liegt bei 21 Äqu./10⁶ g.

Versuch 5

In einem 0,5 m³-Taumeltrockner werden 150 kg Blockcopolyester ([J]: 93 cm³/g; [COOH]: 36 Äqu./10⁶ g; $[T_m]$: 215 °C) aus 57 Gew.-% Terephthalsäure, 30 Gew.-% 1.4-Butandiol und 13 Gew.-% Poly(oxytetramethylen)diol mit $\bar{M}_n$ = 1000 mit 1,5 kg 1.4-Butandiol versetzt. Anschliessend wird wie im Versuch 4 verfahren, wobei die 1. Stufe 6 Stunden und die 2. Stufe 24 Stunden gehalten werden.

Danach betragen die Viskositätszahl [J] 189 cm³/g und die Carboxylendgruppenkonzentration [COOH] 18 Äqu./10⁶ g.

**Versuch B**

In einem 0,5 m³-Taumeltrockner werden 65 kg Blockcopolyester ([J]: 87 cm³/g; [COOH]: 42 Äqu./10⁶ g; [$T_m$]: 220°C) aus 61 Gew.-% Terephthalsäure, 29 Gew.-% 1.4-Butandiol und 10 Gew.-% Poly-(oxyethylen)diol mit $\bar{M}_n$ = 1000 ohne Zusatz von 1.4-Butandiol bei 200°C, einem Stickstoffstrom von 2 m³/h und einem Druck von 40 h Pa nachkondensiert. Nach 24 Stunden betragen die Viskositätszahl [J] 137 cm³/g und die Carboxylendgruppenkonzentration [COOH] 39 Äqu./10⁶ g.

**Versuch 6**

In einem 0,5 m³-Taumeltrockner werden 70 kg Blockcopolyester ([J]: 85 cm³/g; [COOH]: 28 Äqu./10⁶ g; [$T_m$]: 212°C) aus 54 Gew.-% Terephthalsäure, 28 Gew.-% 1,4-Butandiol und 18 Gew.-% Poly-(oxytetramethylen)diol mit $\bar{M}_n$ = 1000 mit 0,35 kg 1,4 Butandiol versetzt. Anschliessend wird wie im Versuch 4 verfahren, wobei die erste Stufe 6 Stunden bei 175°C und die zweite Stufe 16 Stunden bei 200°C gehalten werden. Danach betragen die Viskositätszahl [J] 168 cm³/g und die Carboxylendgruppenkonzentration [COOH] 16 Äqu./10⁶ g.

**Versuch 7**

In einem 0,5 m³-Taumeltrockner werden 70 kg Blockcopolyester ([J]: 97 cm³/g; [COOH]: 35 Äqu./10⁶ g; [$T_m$]: 209°C) aus 46 Gew.-% Terephthalsäure, 22 Gew.-% 1,4-Butandiol und 32 Gew.-% Poly-(oxytetramethylen)diol mit $\bar{M}_n$ = 1000 mit 0,7 kg 1,4-Butandiol im Stickstoffstrom (0,5 m³/h) auf 175°C erhitzt und 6 Stunden bei dieser Temperatur belassen. Dann werden die Innentemperatur auf 195°C und der Stickstoffstrom auf 2 m³/h erhöht und ein Druck von 40 h Pa eingestellt. Nach 16 Stunden beträgt die Viskositätszahl [J] 174 cm³/g. Die Carboxylendgruppenkonzentration [COOH] liegt bei 20 Äqu./10⁶ g.

**Versuche 8 bis 10**

In einem Extruder werden bei 250°C Poly(alkylenterephthalat) (Zusammensetzung, Ausgangseigenschaften – siehe Tabelle 3) sowie Füllstoffe (Art, Menge – siehe Tabelle 3) innig gemischt und zu einem Strang gepresst, der in einem Wasserbad gekühlt und anschliessend granuliert wird.

In einem 0,5 m³-Taumeltrockner werden 100 kg Granulat zur Durchführung der 1. Stufe mit 1,4-Butandiol versetzt und im $N_2$-Strom bei 180°C einige Zeit belassen. Für die 2. Stufe werden der $N_2$-Strom sowie die Temperatur weiter erhöht.

Alle weiteren Verfahrensmassnahmen können Tabelle 4 entnommen werden.

**Versuche C bis E**

Jeweils 100 kg Granulat der gemäss den Versuchen 8 bis 10 (siehe Tabelle 3) erhaltenen Gemische werden in üblicher Weise in fester Phase nachkondensiert. (Die Verfahrensbedingungen sind in Tabelle 4, 2. Stufe, aufgeführt).

Die Endeigenschaften der erfindungsgemäss behandelten Proben sowie die der Vergleichsversuche sind in Tabelle 5 aufgeführt.

Tabelle 3

Versuch 8    70 Gew.-Teile Poly(butylenterephthalat) ([J]: 77 cm³/g; [COOH]: 73 Äqu./10⁶ g; [$T_m$]: 225°C)
30 Gew.-Teile Schnittglasfasern

Versuch 9    80 Gew.-Teile Poly(butylenterephthalat) ([J]: 91 cm³/g; [COOH]: 54 Äqu./10⁶ g; [$T_m$]: 225°C)
20 Gew.-Teile Mahlglasfasern

Versuch 10   90 Gew.-Teile eines Copolyesters hergestellt aus Terephthalsäure/Dodecandisäure//1,4-Butandiol = 90/10//100 Mol-% ([J]: 100 cm³/g; [COOH]: 46 Äqu./10⁶ g; [$T_m$]: 213°C)
10 Gew.-Teile TiO₂ (Bayertitan RKB 2)

Versuch C    entspricht Versuch 8

Versuch D    entspricht Versuch 9

Versuch E    entspricht Versuch 10

Tabelle 4

| Versuch | 1. Stufe Zusatz 1,4-Butandiol [Gew.-%] | $N_2$-Durchsatz [m³/h] | Behandlungszeit [h] | 2. Stufe $N_2$-Durchsatz [m³/h] | Behandlungstemperatur [°C] | -zeit [h] |
|---|---|---|---|---|---|---|
| 8 | 1,2 | 0,50 | 10 | 2 | 210 | 16 |
| 9 | 1,0 | 0,75 | 7 | 2 | 210 | 20 |
| 10 | 0,7 | 0,50 | 6 | 1,75*) | 200 | 15 |
| C | – | – | – | 2 | 210 | 16 |
| D | – | – | – | 2 | 210 | 20 |
| E | – | – | – | 1,75*) | 200 | 15 |

*) 40 mbar $N_2$-Druck

Tabelle 5
Eigenschaften der erfindungsgemäss behandelten Proben

| Versuch | [COOH] [Äqu./$10^6$ g] | J [cm³/g] | Hydrolyse-stabilität*) J [cm³/g] | Abbau [%] | Schmelzviskosität [Pa · s] nach 10 min/240°C | nach 60 min/240°C |
|---|---|---|---|---|---|---|
| 8 | 18 | 168 | 136 | 19 | 3200 | 2750 |
| 9 | 14 | 161 | 129 | 20 | 2850 | 2400 |
| 10 | 7 | 183 | 140 | 23 | 3650 | 3150 |
| C | 78 | 95 | 50 | 47 | 950 | 600 |
| D | 57 | 112 | 62 | 45 | 1300 | 850 |
| E | 54 | 123 | 64 | 48 | 1550 | 900 |

*) bestimmt als Viskositätszahl

## Patentansprüche

1. Verfahren zum Kondensieren von linearem Poly(alkylenterephthalat) mit einer Viskositätszahl von mindestens 60 cm³/g in 2 Stufen und bei erhöhter Temperatur in fester Phase in Gegenwart von Alkandiolen, wobei in dem Poly(alkylenterephthalat) bis zu 30 Mol-% der Terephthalsäure durch andere an sich bekannte Dicarbonsäuren und bis zu 30 Mol-% des jeweiligen Diols durch andere an sich bekannte Diole ersetzt sein können oder bis zu 4 bis 40 Mol-% (bezogen auf das Poly(alkylenterephthalat) eines Poly(oxyalkylen)-diols enthalten sein können, dadurch gekennzeichnet, dass in einer ersten Stufe das Poly(alkylenterephthalat) bei Temperaturen, die 30 bis 80°C unterhalb des Schmelzpunktes des Poly(alkylenterephthalats) liegen, mit 0,3 bis 3,5 Gew.-% – bezogen auf das Poly(alkylenterephthalat) – eines Alkandiols, dessen Siedepunkt bei Normaldruck 20 bis 70°C oberhalb der Reaktionstemperatur liegt, in einem Inertgasstrom behandelt wird, wobei die pro Stunde durchgeleitete Inertgasmenge – gemessen unter Normalbedingungen – dem 0,3- bis 2fachen des Reaktorbruttovolumens entspricht und in einer zweiten Stufe das Poly(alkylenterephthalat) bei Temperaturen, die 5 bis 25°C unterhalb des Schmelzpunktes des Poly(alkylenterephthalats) liegen, in einem Inertgasstrom kondensiert wird, wobei die pro Stunde durchgeleitete Inertgasmenge – gemessen unter Normbedingungen – dem 2,5- bis 10fachen des Reaktorbruttovolumens entspricht.

2. Verfahren nach Anspruch 1, dadurch gekennzeichnet, dass das Poly(alkylenterephthalat) in der ersten Stufe bei Temperaturen, die 35 bis 60°C unterhalb des Schmelzpunktes des Poly(alkylenterephthalats) liegen, behandelt wird.

3. Verfahren nach Anspruch 1 und 2, dadurch gekennzeichnet, dass das Poly(alkylenterephthalat) in der ersten Stufe mit 0,3 bis 1 Gew.-% – bezogen auf das Poly(alkylenterephthalat) – eines Alkandiols behandelt wird.

4. Verfahren nach Anspruch 1 bis 3, dadurch gekennzeichnet, dass das Poly(alkylenterephthalat) in der ersten Stufe mit einem Alkandiol behandelt wird, dessen Siedepunkt bei Normaldruck 30 bis 60°C oberhalb der Reaktionstemperatur liegt.

5. Verfahren nach Anspruch 1 bis 4, dadurch gekennzeichnet, dass in der ersten Stufe die pro Stunde durchgeleitete Inertgasmenge – gemessen unter Normbedingungen – dem 0,5- bis 1,5fachen des Reaktorbruttovolumens entspricht.

6. Verfahren nach Anspruch 1, dadurch gekennzeichnet, dass das Poly(alkylenterephthalat) in der zweiten Stufe bei Temperaturen kondensiert wird, die 10 bis 20°C unterhalb des Schmelzpunktes des Poly(alkylenterephthalats) liegen.

7. Verfahren nach Anspruch 1 und 6, dadurch gekennzeichnet, dass in der zweiten Stufe die pro Stunde durchgeleitete Inertgasmenge – gemessen unter Normbedingungen – dem 3- bis 7fachen des Reaktorbruttovolumens entspricht.

## Claims

1. A process for condensing a linear poly(alkylene terephthalate) having a viscosity number of at least 60 cm³/g in two stages and at elevated temperature in the solid phase in the presence of an alkanediol, up to mol % of the terephthalic acid in the poly(alkylene terephthalate) being optionally replaced by one or more other known dicarboxylic acids and up to 30 mol % of the respective diol in the poly(alkylene terephthalate) being optionally replaced by one or more other known diols or the poly(alkylene terephthalate) optionally containing up to 4 to 40 mol % (based on the poly(alkylene terephthalate) of a poly(oxyalkylene)diol, characterised in that in a first stage the poly(alkylene terephthalate) is treated at a temperature 30 to 80°C below its melting point in an inert gas stream with 0.3 to 3.5 wt.%, based on the poly(alkylene terephthalate), of an alkanediol whose boiling point at standard pressure is 20 to 70°C above the reaction temperature, the quantity of inert gas flowing through per hour – measured at standard conditions – being 0.3 to 2 times the gross volume of the reactor, and in a second stage the poly(alkylene terephthalate) is condensed at a temperature 5 to 25°C below its melting point in an inert gas stream, the quantity of inert gas flowing through per hour – measured at standard conditions – being 2.5 to 10 times the gross volume of the reactor.

2. A process according to claim 1, characterised in that the poly(alkylene terephthalate) is treated in the first stage at a temperature 35 to 60 °C below its melting point.

3. A process according to claim 1 or 2, characterised in that the poly(alkylene terephthalate) is treated in the first stage with 0.3 to 1 wt.% – based on the poly(alkylene terephthalate) – of an alkanediol.

4. A process according to any of claims 1 to 3, characterised in that the poly(alkylene terephthalate) is treated in the first stage with an alkanediol whose boiling point at standard pressure is 30 to 60 °C above the reaction temperature.

5. A process according to any of claims 1 to 4, characterised in that in the first stage the quantity of inert gas flowing through per hour – measured at standard conditions – is 0.5 to 1.5 times the gross volume of the reactor.

6. A process according to claim 1, characterised in that the poly(alkylene terephthalate) is condensed in the second stage at a temperature 10 to 20 °C below its melting point.

7. A process according to claim 1 or 6, characterised in that in the second stage the quantity of inert gas flowing through per hour – measured at standard conditions – is 3 to 7 times the gross volume of the reactor.

**Revendications**

1. Procédé pour la condensation de poly-(téréphtalate d'alkylène) linéaire ayant un indice de viscosité d'au moins 60 cm³/g, en deux étapes et à température élevée, en phase solide, en présence d'alcane-diols, jusqu'à 30 mol% de l'acide téréphtalique dans le poly-(téréphtalate d'alkylène) pouvant être remplacés par d'autres acides dicarboxyliques en eux-mêmes connus et jusqu'à 30 mol% du diol dont il s'agit pouvant être remplacés par d'autres diols en eux-mêmes connus, ou bien jusqu'à 4 à 40 mol% (relativement au poly-(téréphtalate d'alkylène)) d'un poly-(oxyalkylène)-diol pouvant être contenus,

caractérisé par le fait qu'on traite en une première étape, dans un courant de gaz inerte, le poly-(téréphtalate d'alkylène), à des températures qui sont inférieures de 30 à 80 °C au point de fusion du poly-(téréphtalate d'alkylène), par 0,3 à 35% en poids, relativement au poly-(téréphtalate d'alkylène), d'un alcane-diol dont le point d'ébullition à la pression normale est supérieur de 20 à 70 °C à la température de réaction, la quantité de gaz inerte que l'on fait passer par heure, mesurée dans les conditions normales, correspondant à 0,3 à 2 fois le volume brut du réacteur et qu'en une deuxième étape on condense dans un courant de gaz inerte le poly-(téréphtalate d'alkylène) à des températures qui sont inférieures de 5 à 25 °C au point de fusion du poly-(téréphtalate d'alkylène), la quantité de gaz inerte que l'on fait passer par heure, mesurée dans les conditions normales, correspondant à 2,5 à 10 fois le volume brut du réacteur.

2. Procédé selon la revendication 1, caractérisé par le fait qu'à la première étape, on traite le poly-(téréphtalate d'alkylène) à des températures qui sont inférieures de 35 à 60 °C au point de fusion du poly-(téréphtalate d'alkylène).

3. Procédé selon les revendications 1 et 2, caractérisé par le fait qu'à la première étape on traite le poly-(téréphtalate d'alkylène) par 0,3 à 1% en poids d'un alcane-diol, relativement au poly-(téréphtalate d'alkylène).

4. Procédé selon les revendications 1 à 3, caractérisé par le fait qu'à la première étape on traite le poly-(téréphtalate d'alkylène) par un alcane-diol dont le point d'ébullition à la pression normale est supérieur de 30 à 60 °C à la température de réaction.

5. Procédé selon les revendications 1 à 4, caractérisé par le fait qu'à la première étape, la quantité de gaz inerte que l'on fait passer par heure, mesurée dans les conditions normales, correspond à 0,5 à 1,5 fois le volume brut du réacteur.

6. Procédé selon la revendication 1, caractérisé par le fait qu'à la deuxième étape on condense le poly-(téréphtalate d'alkylène) à des températures qui sont inférieures de 10 à 20 °C au point d'ébullition du poly-(téréphtalate d'alkylène).

7. Procédé selon les revendications 1 et 6, caractérisé par le fait qu'à la deuxième étape, la quantité de gaz inerte que l'on fait passer par heure, mesurée dans les conditions normales, correspondant à 3 à 7 fois le volume brut du réacteur.